(19) Europäisches Patentamt
European Patent Office
Office européen des brevets

(11) Publication number: **0 187 046 B1**

(12) # EUROPEAN PATENT SPECIFICATION

(45) Date of publication of patent specification: **17.04.91** (51) Int. Cl.[5]: **G06F 15/24**

(21) Application number: **85309494.4**

(22) Date of filing: **24.12.85**

(54) **Point-of-sales data system.**

(30) Priority: **27.12.84 JP 280631/84**
**28.12.84 JP 275303/84**
**28.12.84 JP 275304/84**

(43) Date of publication of application:
**09.07.86 Bulletin 86/28**

(45) Publication of the grant of the patent:
**17.04.91 Bulletin 91/16**

(84) Designated Contracting States:
**DE FR GB**

(56) References cited:

**IBM TECHNICAL DISCLOSURE BULLETIN, vol. 26, no. 3A, August 1983, page 1202, New York, US; N.C. STROLE: "Store system with distributed price look-up function"**

**IBM TECHNICAL DISCLOSURE BULLETIN, vol. 24, no. 2, July 1981, pages 976-978, New York, US; M.E. CHAMOFF et al.: "Dynamic self-optimizing price lookup for retail terminal system"**

**PATENTS ABSTRACTS OF JAPAN, vol. 8, no. 86 (P-269) [1523], 19th April 1984; & JP - A - 59 2175 (FUJITSU K.K.) 07-01-1984**

(73) Proprietor: **FUJITSU LIMITED**
**1015, Kamikodanaka Nakahara-ku**
**Kawasaki-shi Kanagawa 211(JP)**

(72) Inventor: **Shimoda, Makoto**
**40-1, Toriba-cho, Maebashi-shi**
**Gunma 371(JP)**
Inventor: **Ishino, Tatsuyuki**
**33-18, Ikuta 6-chome Tama-ku**
**Kawasaki-shi Kanagawa 214(JP)**
Inventor: **Matsuo, Makoto**
**Izumi-kopo B103, 2-15-9 Tonyamachi**
**Maebashi-shi, Gunma 371(JP)**

(74) Representative: **Rackham, Stephen Neil et al**
**GILL JENNINGS & EVERY 53-64 Chancery Lane**
**London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 187 046 B1**

## Description

This invention relates to a Point-Of-Sales (POS) data system for use in, for example, department stores, supermarkets and the like. The system is mainly constituted by a computer system.

Recently, in department stores and supermarkets which handle a variety of goods on a very large scale, the sales and stock data of such goods are managed by a POS system constituted, in general, by a central control computer (controller) provided in a management centre in the store and a plurality of POS terminals provided at sales counters in the store. Each POS terminal comprises a keyboard, a bar-code reader (scanner), and a display device. The POS terminal also comprises at least one memory device used as a Price Look-Up (PLU) file for storing article codes, article names, unit prices, and the like. Conventionally, the PLU file is provided in the POS terminal because this table must be frequently indexed by an operator at the POS terminal.

On the other hand, article data such as the unit cost of the article stored in the PLU file of each POS terminal are often changed on a daily basis, or even during the course of business. Therefore, it is necessary to transmit the article data in the PLU file for each day to each POS terminal, from the central computer, prior to the start of business, to update each day the content of the PLU file in each POS terminal. However, the transmission of the article data to each POS terminal every day takes a long time and involves a complicated procedure. In particular, when the necessity to update the PLU file, for example to change unit costs, correct erroneous article data, or register new article data into the PLU file, etc., arises during the course of business, the central computer must correct the data in the PLU file and transmit the corrected data to all of the POS terminals. However, this operation wastes time, and during that time, service at the POS terminal is interrupted, with the result that customers must be kept waiting for an inordinate length of time. Furthermore, to constitute each POS terminal to contain the PLU file greatly increases the cost of the POS system.

IBM Technical Disclosure Bulletin Vol. 24, No. 2, July 1981 discloses a first example of a POS system of the type discussed above. In the particular system described, each terminal is provided with its own local price look-up file as well as having access to a main price look-up file in a controller. The terminal first attempts to find an item in its local table and refers to the main table only if the item is not present locally. Although this is effective to reduce the overall time spent by the local terminal in accessing the controller it suffers the disadvantage of increasing the cost and complexity of the POS terminal, and also suffers the disadvantage, discussed in further detail below, of needing to spend significant lengths of time in updating sales information in the main controller after the completion of a transaction.

IBM Technical Disclosure Bulletin Vol. 26, No. 3a, August 1983, discloses a further system using local look-up tables in each POS terminal, the system differing only in that when the requested item is not in the local table for a terminal then it is found in the local table of one of the other terminals. This system is also subject to all the disadvantages discussed above.

It would be preferable if the updating of the PLU file could be performed immediately and the result of the updating be immediately and simultaneously reflected at all POS terminals in the POS system.

In addition, at present the controller includes a sum table for storing total sales information. This sum table is accessed in a separate operation on completion of each transaction to update the sales information contained in it. Typically article data on the transaction is used to search a disk memory to obtain the address information of the sum table to be updated with the article data from each transaction.

According to this invention a Point-Of-Sales (POS) data system including at least one controller provided at a management centre in a store and a plurality of POS terminals provided at sales counters in the store, the controller and each POS terminal being connected by a closed circuit in the store; the controller including a price look-up file (PLU) and a sum table for storing total sales information, and in which the price look-up file is searched by a price look-up inquiry signal having an article code generated at a POS terminal and returns a price signal including unit price data to the POS terminal that generated the price look-up inquiry signal is characterised in that the price look-up file (PLU) also outputs as part of the price signal an access address for addressing the sum table, and in that after receipt of the price signal and completion of the transaction at the POS terminal article data including the total price, number of articles in the transaction and access address of the sum table are transmitted from the POS terminal to the sum table to update it.

An embodiment of the invention will now be described, by way of example, with reference to the accompanying drawings, in which

Fig.1 is a schematic block diagram of a POS system according to the invention;

Fig.2 is a schematic block diagram of a price look-up unit (PLUU) forming part of the system of Fig. 1;

Fig.3 shows the structure of a PLU file used in the unit of Fig. 2;

Figs. 4A and 4B are schematic block diagrams of a POS terminal forming part of the system of Fig. 1;

Fig. 5 is a schematic communication format between the controller and the POS terminal;

Fig. 6, is a schematic signal format of a PLU inquiry signal;

Figs. 7A and 7B are schematic process flowcharts of signals between the controller and the POS terminal;

Fig. 8 is a schematic process flowchart of signals in the controller; and

Fig.9 is a perspective view of a POS terminal shown in Fig. 1.

A POS system according to an embodiment of the invention will now be explained in detail.

Referring to Fig. 1, the POS system comprises at least two controllers used as a current controller 100-0 and a reserve or back-up controller 100-1, and a plurality of POS terminals 1-0 to 1-n. The two controllers 100-0 and 100-1 and the POS terminals 1-0 to 1-n are connected by a closed circuit L.

The controller 100-0 comprises a price look-up unit (PLUU) 102-0, a restoration unit (RSTU) 103-0 and a polling unit (POLU) 104-0: The reserve controller 100-1 has the same structure as the controller 100-0. As shown in Fig. 2, the PLUU 102-0 (or 102-1) comprises at least one main central processing unit (CPU), an arithmetic CPU, a sub-CPU, and a price look-up memory. The restoration unit 103-0 is used as a reserve or back-up PLU unit when the PLUU 102-0 is taken out of service. The polling unit 104-0 is used for generating a polling signal for feeding to the POS terminals 1-0 to 1-n and for checking whether the PLUU 102-0 is operating normally.

Each POS terminal 1-0 to 1-n comprises a terminal equipment (TE) unit 101-0 to 101-n as detailed in Figs. 4A and 4B.

The basic signal responses, for example between the current controller 100-0 and the POS terminal 1-0 are as follows. The polling signal POL (Fig. 1) is always fed from the controller 100-0 to the POS terminals 1-0 to 1-n. In response to the polling signal POL, a PLU inquiry signal S1 is sent from the POS terminal 1-0 to the controller 100-0 to request unit price, etc. as the first step. In the next step, the PLU response signal S2 is sent from the controller 100-0 to the POS terminal 1-0 in response to the PLU inquiry signal S1. Finally, article data S3 are sent from the POS terminal 1-0 to the controller 100-0 in response to the PLU response signal S2, to inform the controller 100-0 of the quantity of sales, sum of money, and the like at the POS terminal 1-0.

Referring to Fig. 2, the PLUU 102-0 (or 102-1) comprises a main CPU C1, an arithmetic CPU C2, a sub CPU C3, a price look-up (PLU) member M1, an arithmetic memory M2, a buffer memory M3 and direct memory access controllers (DMAC) DM1 and DM2.

The main CPU C1 basically executes task management for the POS terminals 1-0 to 1-n through the sub CPU C3, which controls each of the POS terminals 1-0 to 1-n based on the PLU inquiry signals and response signals. The arithmetic CPU basically executes calculations for the main CPU and the sub CPU. The PLU memory M1 is used as a PLU file constituted by a Master File portion and a Temporary File portion, as shown in Fig. 3. The arithmetic memory M2 is used for temporarily storing the result of the calculation in the arithmetic CPU C2. The memory M3 is used as a buffer when the closed circuit L is busy. Both direct memory access controllers DM1 and DM2 are used for a quick access of data between these CPU's.

A floppy disk F1 is used for fixedly storing article data, for example article name, unit price, attribute, and the like.

As can be seen from the drawing, the sub CPU C3 and the buffer memory M3 constitute a POS interface section. The main CPU C1, PLU memory M1, floppy disk F1, DMAC DM1, and DMAC DM2 constitute a main control section. The arithmetic CPU C2 and arithmetic memory M2 constitute a calculation section.

When a PLU inquiry signal is input to the sub CPU C3, the signal is sent to the main CPU C1 after being temporarily stored in the buffer memory M3. The main CPU C1 looks up the temporary memory and the master memory in the PLU memory M1, and the looked-up data added with the bank number and address are transmitted to the POS terminal through the buffer memory M3, the sub CPU C3 and the closed circuit L.

After a sale is made, the article data at the POS terminals 1-0 to 1-n is sent to the main CPU C1 through the CPU C3 and the buffer memory M3, and stored in the PLU memory M1.

The data stored in the PLU memory M1 is temporarily read out and added to the data read out from the arithmetic memory M2. This addition is performed by the arithmetic CPU C2. By this calculation, the quantity and sum of money are updated, and the data is refiled in the PLU file in the memory M1.

Referring to Fig. 3, the PLU file comprises a master file portion MF and a temporary file portion TF each of which has a PLU table and a sum table. The PLU table is used for storing article data, unit price, and the like and is divided into several items. That is, an article code, a classified code, a unit price, an article name, an attribute and a spare.

The sum table is used for summing prices and is divided into quantity and sum of money. The master file MF is used for fixedly storing article data for a long term and the temporary file TF is used for temporarily storing article data for a short term, e.g., about one day. The master file MF is constituted by a plurality of banks, and each bank can store, for example, 450 article codes. The temporary file TF is constituted by only one bank.

Referring to Figs. 4A and 4B, the POS terminal equipment comprises a main control unit MCU, an input/output control unit IOCU and an input/output unit IOU.

The main control unit MCU is provided to analyze the contents of article data and for processing that data as sum and registration data. Reference number 10 represents a microprocessor unit MPU for processing these tasks by executing a control program; 11 a read only memory ROM for storing a control program and parameter necessary for carrying out the process in the MPU 10; 12 a random access memory RAM for temporarily storing control data necessary for carrying out the operation in the MPU 10; 13 a direct memory access controller DMAC for directly accessing the ROM 11 and the RAM 12 in response to a command from the MPU 10; and 14 a data bus for interconnection between these units.

The input/output control unit IOCU is provided to execute various tasks, for example a key input task, scan task, print task, circuit control task and the like. Reference number 20 represents the other side microprocessor unit MPU for processing the above tasks by executing a predetermined program; 21 the other side ROM for storing the other side control program and parameter necessary for carrying out the process in the MPU 20; 22 the other side RAM for storing the data necessary for carrying out the operation in the MPU 20; 23 the other side DMAC for directly accessing the RAM 22 in response to a command from the MPU 20; and 24 an interface circuit for connection between the bus 14 in the MCU and the bus 25 in the IOCU and for transferring data and commands.

The input/output unit IOU is constituted by a keyboard 30, a printer 32, a cash drawer 34, a display 35, and a bar-code scanner. The IOU further comprises a key control means 31, a printer control means 33, a port 36, a scanner interface 38, and a line interface 39. The line interface 39 is connected to the controller 100-0 of the management center in the store.

When the article code and quantity are input from the keyboard 30 or the scanner 37 by an operator, the signal is sent to the MCU through the IOCU. After the necessary processing is performed between the MCU and the IOCU by using the DMACs13 and 23, the signal is transmitted from the line interface 39 to the controller 100-0. These procedures will be explained in Figs. 7 and 8.

Referring to Fig. 5, the communication signal format is constituted by eleven sections 1 to 11, that is, an item length 1 indicating the byte number of a signal, an item identification 2, a signal identification code 3, a designation 4, an article code 5, a classified code 6 indicating the kind of article, a unit price 7, an article name 8, an attribute 9, a bank number and address code 10, and an original unit price 11.

The signal identification code 3 is constituted by a maintenance request (from terminal to controller), an old data signal (from controller to terminal), a new data signal (from terminal to controller), a non-registration signal (from controller to terminal), a double-registration signal (from controller to terminal), a busy signal (from controller to terminal), a process completion signal (from controller to terminal), and a process noncompletion signal (from controller to terminal).

The designation 4 is used when the terminal designates a creation, change, erasure, and combination of the data. Accordingly, this code is sent from the terminal to the controller.

The attribute 9 carries information regarding a so-called bundled and mixed sale. The bank number and address code 10 carry position data (address data) in the sum table corresponding to the article code. The original unit price 11 carries price information at the bundled and mixed sale.

Referring to Fig. 6, the PLU inquiry signal is constituted by four sections 1 to 4, that is, an item length 1, item identification 2, PLU inquiry 3, and article code 4.

Referring to Figs. 7A and 7B, the flowchart indicates the signal processing between the controller and the terminal.

In the POS terminal, the article code is input from the keyboard or the bar-code scanner (step A). The PLU inquiry signal is generated based on the article code and sent to the controller (step B).

In the controller, it is judged whether this signal is a PLU inquiry signal or an inspection request signal (step 1). If this signal is the inspection request signal, the process goes to the flowchart shown in Fig. 8. If this signal is the PLU inquiry signal, the temporary file TF of the PLU file is searched (step 2). As shown in Fig. 3, since the PLU file is constituted by the PLU table and the sum table, the bank number and the address at the sum table can be simultaneously extracted when the PLU table is searched based on this inquiry signal. As a result of the search, if the article code is accidentally erased in the PLU table, the controller transmits the PLU response (NG) signal to the POS terminal (step 3). If the article code is not erased but is not registered in the temporary file TF (step 4), the master file MF of the PLU file is searched (step 5). However, when the article code is registered in the temporary file TF, the attribute is checked (step 7). When the article code is not registered, the controller also transmits the PLU response (NG) signal to the POS terminal as a non-registration response (step 6). When the article code is registered, the attribute is checked (step 7).

When the attribute, i.e., conditions of sale, exists, the process of bundled and mixed sale is performed in the controller. Moreover, the PLU response (OK) signal regarding the bank number and the address is sent to the POS terminal (step 8). If the attribute does not exist, the PLU response (OK) signal is also sent to the POS terminal. In this case, the bank number and the address are also sent to the POS terminal.

When the PLU response (NG) signal is input to the POS terminal, the POS terminal generates a maintenance signal and transmits that signal to the controller (step C). When the PLU response (OK) signal is input to the POS terminal, the POS terminal adds the article data for quantity and sum of money to the bank number and the address section, and transmits that data to the controller (step D).

In the controller, the sum table is accessed by the bank number and the address, which are received from the POS terminal (step 9), and the resultant data is stored in the sum table (step 10).

Referring to Fig. 8, when the signal is the inspection request signal (step 1), this signal is input to the controller (step 21). Next, in the controller, this signal is checked whether or not it is in regard to the article or not (step 22). When this signal is not the article, the controller transmits a request signal to each POS terminal (step 23) to compile the data. The controller receives data from all POS terminals (step 24). The controller also checks whether or not the data is input from all POS terminals (step 25). When the data is input from all the POS terminals, the data is summed as the data from all POS terminals (step 26). Finally, the inspection data is sent to the POS terminal which generated the inspection request signal (step 28). If this signal is in regard to an article as shown by step 22, the controller compiles the article data (step 27). This data is sent to the POS terminal (step 28).

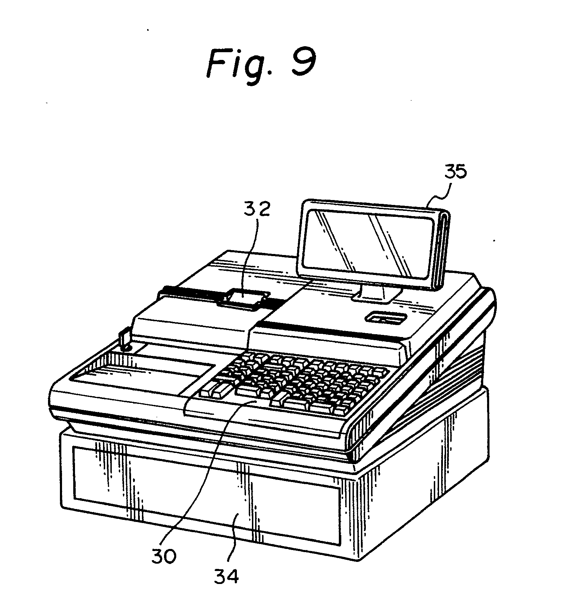

Referring to Fig. 9, this POS terminal is provided at each sales counter in the store as explained above. The operator operates the keyboard 30 based on the article code, article name, and unit price. After summing, the drawer 34 is opened and summing data is displayed on the display panel 35 and printed out by the printer 32.

## Claims

1. A Point-Of-Sales (POS) data system including at least one controller (100-0; 100-1) provided at a management centre in a store and a plurality of POS terminals (1-0;1-1;...1-n) provided at sales counters in the store, the controller and each POS terminal being connected by a closed circuit (L) in the store; the controller including a price look-up file (PLU) (Fig.3) and a sum table for storing total sales information, and in which the price look-up file is searched by a price look-up inquiry signal (S1) having an article code generated at a POS terminal (1-0; 1-1;...1-n) and returns a price signal (S2) including unit price data to the POS terminal that generated the price look-up inquiry signal (S1):
   characterised in that the price look-up file (PLU) also outputs as part of the price signal (S2) an access address (10) for addressing the sum table, and in that after receipt of the price signal (S2) and completion of the transaction at the POS terminal, article data (S3) including the total price, number of articles in the transaction and access address (10) of the sum table are transmitted from the POS terminal to the sum table to update it.

2. A system as claimed in claim 1, characterised in that the price look-up (PLU) file comprises a master file (MF) for storing fixed article data for a long term and a temporary file (TF) for temporarily storing article data in the short term, and, in which the search by the inquiry signal (S1) is initially performed in the temporary file (TF) and, only if no match is found is the search carried out in the master file (MF).

3. A system as claimed in claim 1 or claim 2, characterised in that the price look-up table includes an article code, an article name, a unit price and an attribute for each entry.

4. A system as claimed in any preceding claim, characterised in that the sum table accumulates and stores totals of each of the articles sold and total monetary sales.

5. A system as claimed in any preceding claim, characterised in that the price look-up inquiring signal (S) comprises at least an item length, an item identification, a signal identification code, an article code, a unit price, an article name, and an attribute.

6. A system as claimed in any preceding claim, characterised in that the controller (100-0;100-1) further comprises first means for compiling data corresponding to an inspection request signal from any of the POS terminals (1-0;1-1;...1-n) and second means for transmitting the compiled data to the POS terminal which generated the inspection request signal.

## Revendications

1. Système de données de point de vente (POS) comprenant au moins un contrôleur (100-0 ; 100-1) prévu au niveau d'un centre de gestion dans un magasin, ainsi qu'une pluralité de terminaux POS (1-0 ; 1-1... 1-n) prévus au niveau des comptoirs de vente dans le magasin, le contrôleur ainsi que chacun des terminaux POS étant reliés par un circuit fermé (L) dans le magasin ; le contrôleur comportant un fichier de consultation des prix (PLU) (figure 3), ainsi qu'un tableau de totalisation pour permettre le stockage d'informations de totalisation liées aux ventes, et dans lequel le fichier de consultation des prix est recherché par un signal d'interrogation de consultation des prix (S1) qui est en possession d'un code article généré au niveau d'un terminal POS (1-0 ; 1-1... 1-n) et donne en restitue un signal de prix (S2) qui inclut des données de prix unitaire au niveau du terminal POS qui a généré le signal d'interrogation de consultation des prix (S1) :
   caractérisé en ce que le fichier de consultation des prix (PLU) livre aussi en sortie et comme faisant partie intégrante du signal de prix (S2) une adresse d'accès (10) qui permet d'adresser le tableau de totalisation, et en ce qu'après la réception du signal de prix (S2) et la fin de la transaction au niveau du terminal POS, des données liées à l'article (S3) incluant le prix total, le nombre d'articles dans la transaction, et l'adresse d'accès (10) du tableau de totalisation sont transmises depuis le terminal POS au tableau de totalisation afin de le mettre à jour.

2. Système selon la revendication 1, caractérisé en ce que le fichier de consultation des prix (PLU) comporte un fichier maître (MF) qui permet de stocker des données fixes liées à l'article pour une longue période ainsi qu'un fichier temporaire (TF) qui permet de stocker temporairement des données liées à l'article pour une courte période, et dans lequel la recherche effectuée par le signal de recherche (S1) est réalisée tout d'abord dans le fichier temporaire (TF) et, seulement si aucune correspondance n'est trouvée, cette recherche est ensuite effectuée dans le fichier maître (MF).

3. Système selon la revendication 1 ou la revendication 2, caractérisé en ce que le tableau de consultation des prix comporte un code article, un nom article, un prix unitaire ainsi qu'un attribut pour chaque entrée.

4. Système selon l'une quelconque des revendications qui précèdent, caractérisé en ce que le tableau de totalisation accumule et stocke des totaux pour chacun des articles vendus ainsi que des totaux liés au montant des ventes.

5. Système selon l'une quelconque des revendications qui précèdent, caractérisé en ce que le signal d'interrogation de consultation des prix (S1) comprend au moins une longueur élémentaire, une identification élémentaire, un code d'identification de signal, un code article, un prix unitaire, un nom article et un attribut.

6. Système selon l'une quelconque des revendications qui précèdent, caractérisé en ce que le contrôleur (100-0; 100-1) comporte également un premier moyen pour compiler des données correspondant à un signal de requête d'inspection délivré par un quelconque des terminaux POS(1-0; 1-1; ... 1-n) ainsi qu'un second moyen pour transmettre les données ainsi compilées au terminal POS ayant généré le signal de requête d'inspection.

## Ansprüche

1. Datensystem für Verkaufsstellen (POS) mit wenigstens einem Kontroller (100-0; 100-1), der an einem Management-Zentrum in einem Laden vorgesehen ist, und einer Vielzahl von POS-Terminals (1-0; 1-1; ... 1-n), die an Verkaufsständen in dem Laden vorgesehen sind, wobei der Kontroller und jedes POS-Terminal durch einen geschlossenen Stromkreis (L) in dem Laden verbunden sind; der Kontroller eine Preistabellendatei (PLU) (Fig. 3) enthält, und eine Summentabelle zum Speichern der gesamten Verkaufsinformation, und bei dem die Preistabellendatei durch ein Preistabellen-Abfragesignal (S1) durchgesucht wird, das einen Artikelcode enthält, der an einem POS-Terminal (1-0; 1-1; ... 1-n) erzeugt wurde, und ein Preissignal (S2), welches Einheitenpreisdaten enthält, an das POS-Terminal retourniert, welches das Preistabellen-Abfragesignal (S1) erzeugt:
   dadurch gekennzeichnet, daß die Preistabellendatei (PLU), als Teil des Preissignals (S2), auch eine Zugriffsadresse (10) zum Adressieren der Summentabelle ausgibt, und daß nach Empfang des Preissignals (S2) und Vervollständigung der Transaktion bei dem POS-Terminal Artikeldaten (S3), die den Gesamtpreis, die Anzahl der Artikel in der Transaktion und die Zugriffsadresse (10) der Summentabelle enthalten, von dem POS-Terminal zu der Summentabelle übertragen werden, um sie zu aktualisieren.

**2.** System nach Anspruch 1, dadurch gekennzeichnet, daß die Preistabellen-(PLU)-Datei eine Masterdatei (MF), zum Speichern fester Artikeldaten für eine längere Zeit, und eine temporäre Datei (TF), zum temporären Speichern von Artikeldaten während einer kurzen Zeit, umfaßt, und bei dem die Suche durch das Abfragesignal (S1) anfänglich in der temporären Datei durchgeführt wird, und, falls keine Übereinstimmung gefunden wird, die Suche in der Masterdatei (MF) durchgeführt wird.

**3.** System nach Anspruch 1 oder 2, dadurch gekennzeichnet, daß die Preistabelle einen Artikelcode, einen Artikelnamen, einen Einheitenpreis und ein Attribut für jeden Eintrag enhält.

**4.** System nach einem der vorhergehenden Ansprüche, dadurch gekennzeichnet, daß die Summentabelle Gesamtwerte von jedem der Verkaufsartikel akkumuliert und speichert und auch die gesamte Geldsumme der Verkäufe.

**5.** System nach einem der vorhergehnden Ansprüche, dadurch gekennzeichnet, daß das Preistabellen-Abfragesignal (S1) wenigstens eine Postenlänge, eine Postenidentifikation, einen Signalidentifikationscode, einen Artikelcode, einen Einheitenpreis, einen Artikelnamen und ein Attribut enthält.

**6.** System nach einem der vorhergehenden Ansprüche, dadurch gekennzeichnet, daß der kontroller (100-0; 100-1) ferner erste Einrichtungen zum Kompilieren von Daten umfaßt, die einem Inspektionsanforderungssginal von einem beliebigen der POS-Terminals (1-0; 1-1; ... 1-n) entsprechen, und zweite Einrichtungen zum übertragen der kompilierten Daten zu dem POS-Terminal umfaßt, welches das Inspektionsanforderungssignal erzeugt hat.

*Fig. 1*

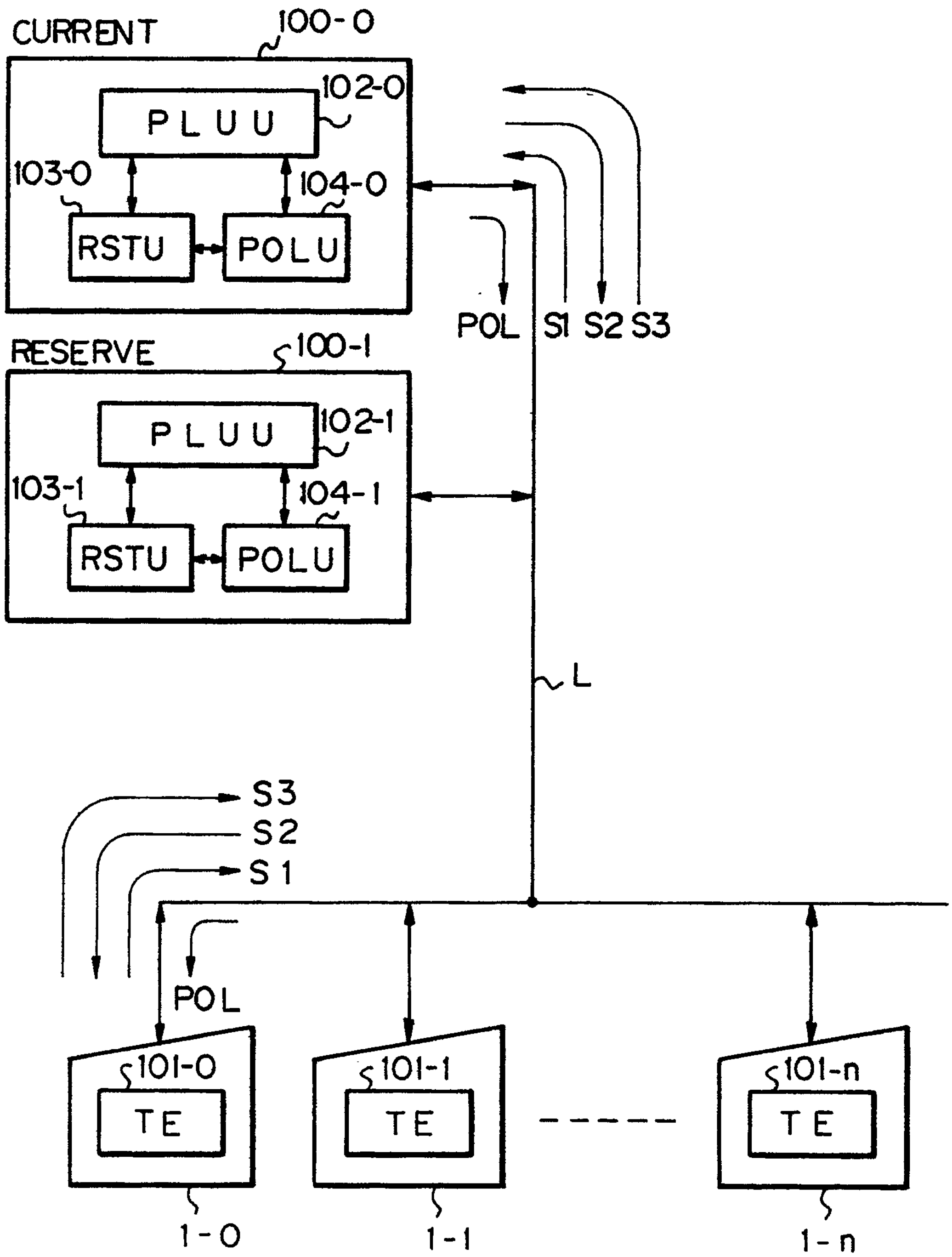
CURRENT
100-0
PLUU
102-0
103-0
104-0
RSTU
POLU
POL
S1
S2
S3
RESERVE
100-1
PLUU
102-1
103-1
104-1
RSTU
POLU
L
S3
S2
S1
POL
101-0
TE
101-1
TE
101-n
TE
1-0
1-1
1-n

Fig. 2

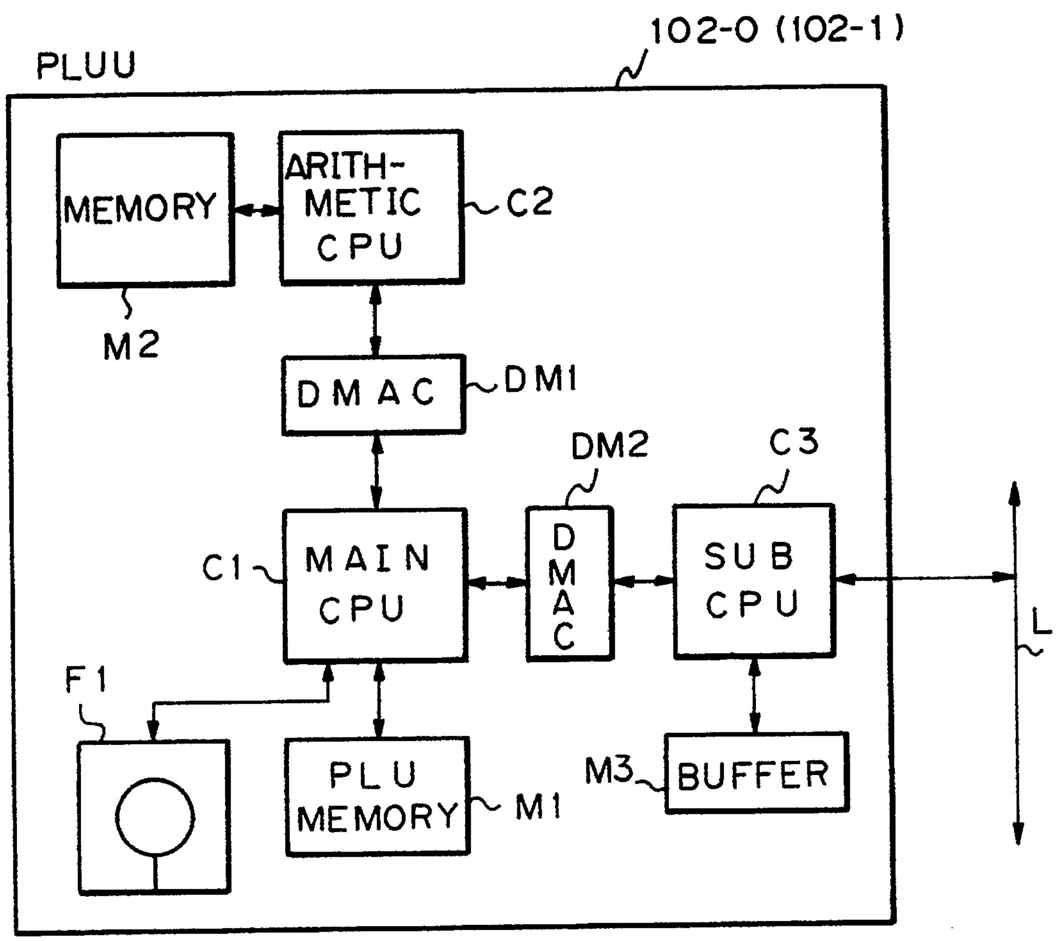
102-0 (102-1)
PLUU
MEMORY
ARITH-
METIC
CPU
C2
M2
DMAC
DM1
DM2
C3
C1
MAIN
CPU
D
M
A
C
SUB
CPU
L
F1
PLU
MEMORY
M1
M3
BUFFER

Fig. 3

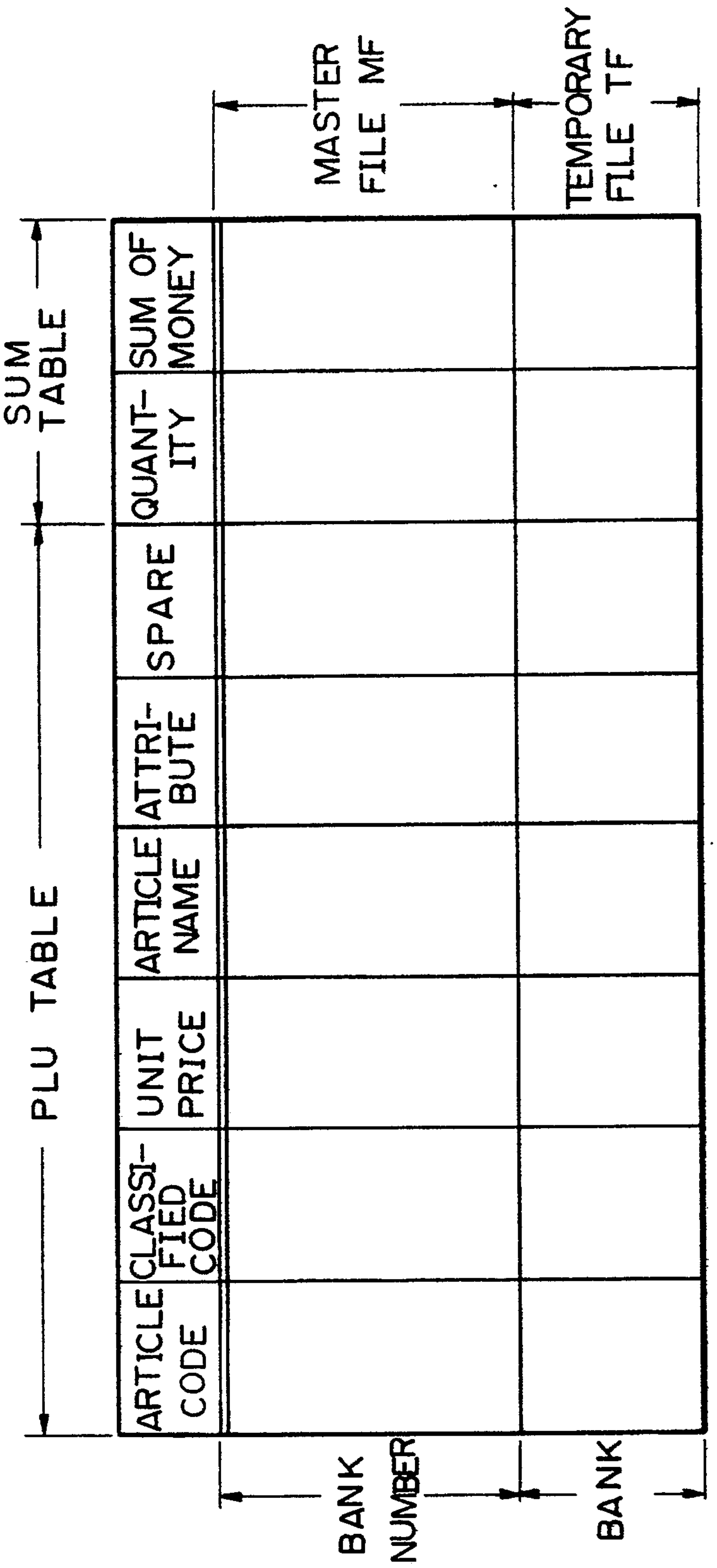
PLU TABLE
SUM TABLE
ARTICLE CODE
CLASSI-FIED CODE
UNIT PRICE
ARTICLE NAME
ATTRI-BUTE
SPARE
QUANT-ITY
SUM OF MONEY
MASTER FILE MF
TEMPORARY FILE TF
BANK NUMBER
BANK

Fig. 4A

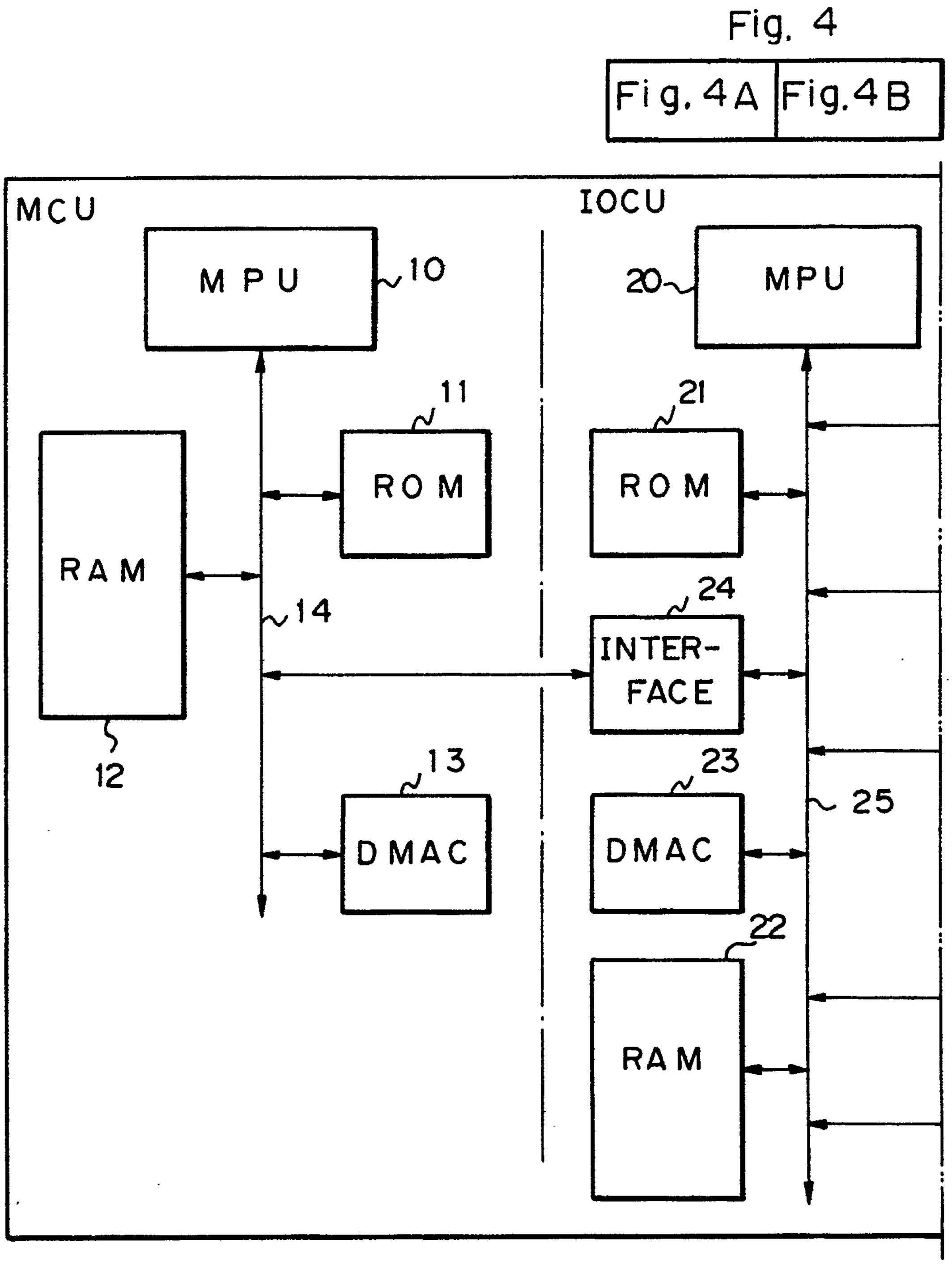
Fig. 4
Fig. 4A
Fig. 4B
MCU
IOCU
MPU
10
20
MPU
11
ROM
21
ROM
RAM
14
24
INTER-
FACE
12
13
DMAC
23
DMAC
25
22
RAM

Fig. 4 B

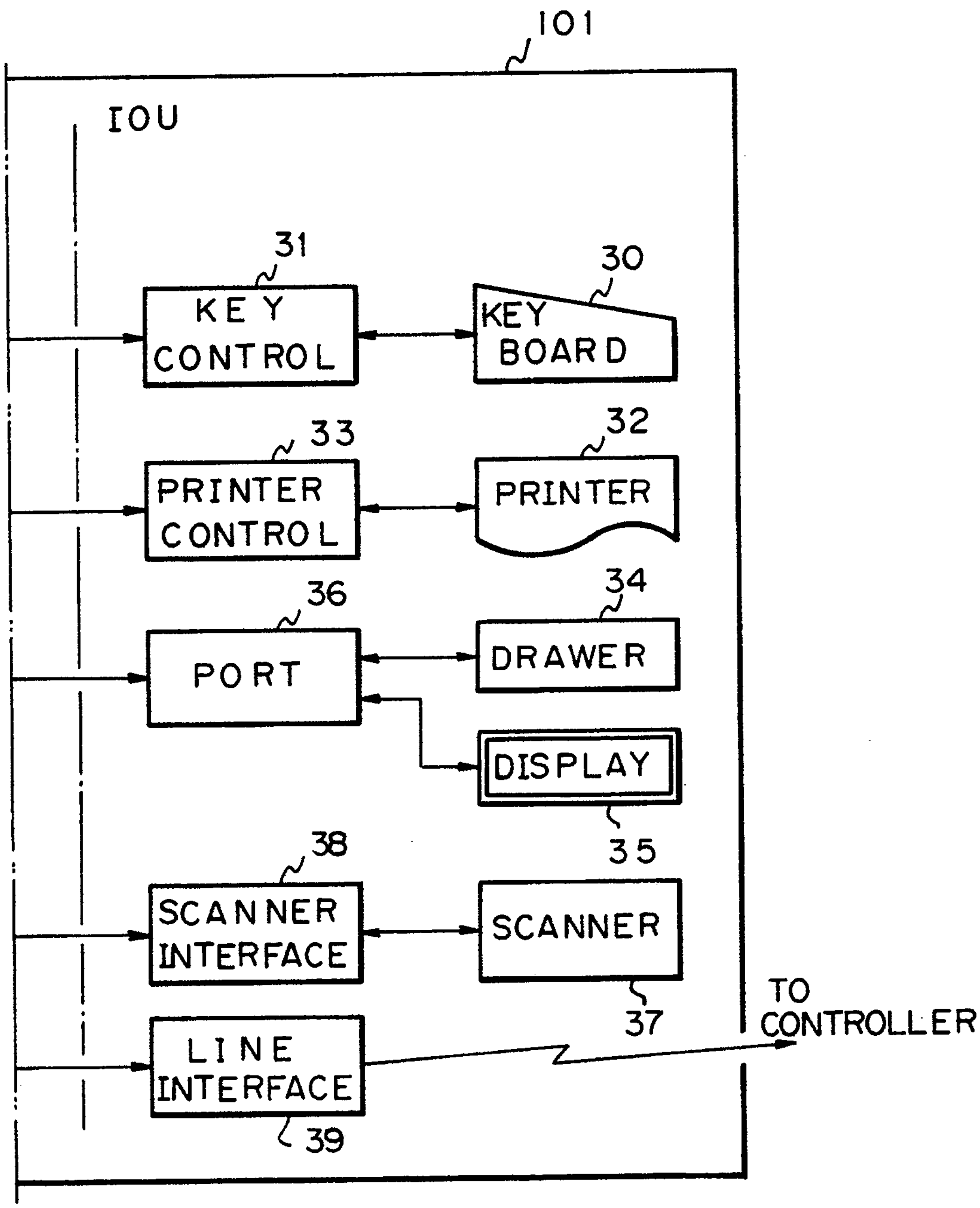
101
IOU
31
KEY CONTROL
30
KEY BOARD
33
PRINTER CONTROL
32
PRINTER
36
PORT
34
DRAWER
DISPLAY
35
38
SCANNER INTERFACE
SCANNER
37
TO CONTROLLER
LINE INTERFACE
39

Fig. 5

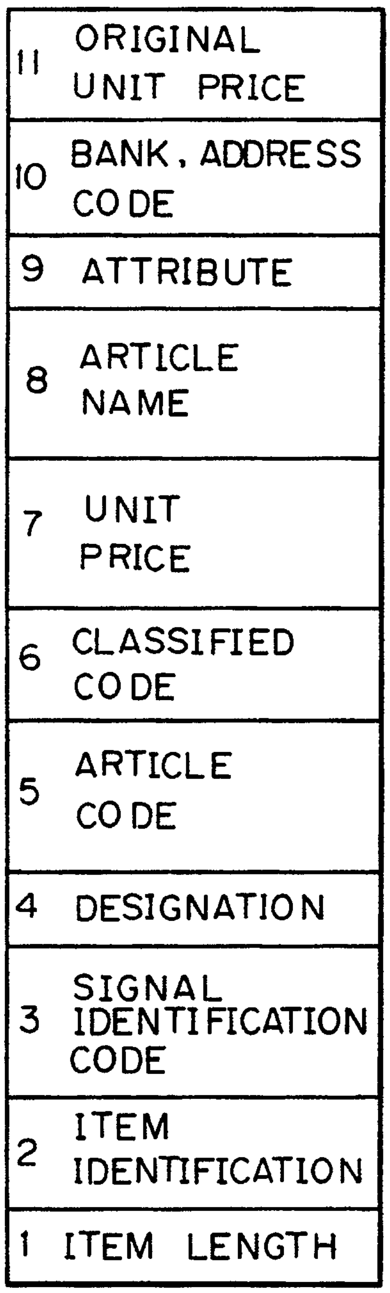
11 ORIGINAL UNIT PRICE
10 BANK, ADDRESS CODE
9 ATTRIBUTE
8 ARTICLE NAME
7 UNIT PRICE
6 CLASSIFIED CODE
5 ARTICLE CODE
4 DESIGNATION
3 SIGNAL IDENTIFICATION CODE
2 ITEM IDENTIFICATION
1 ITEM LENGTH

Fig. 6

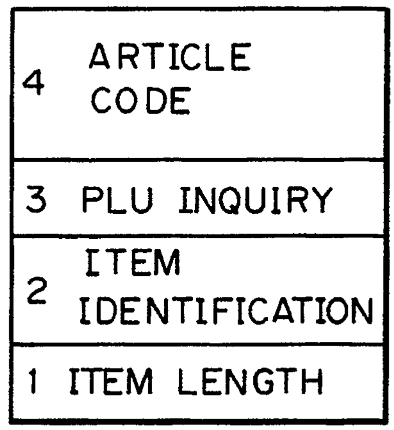
4 ARTICLE CODE
3 PLU INQUIRY
2 ITEM IDENTIFICATION
1 ITEM LENGTH

Fig. 7A

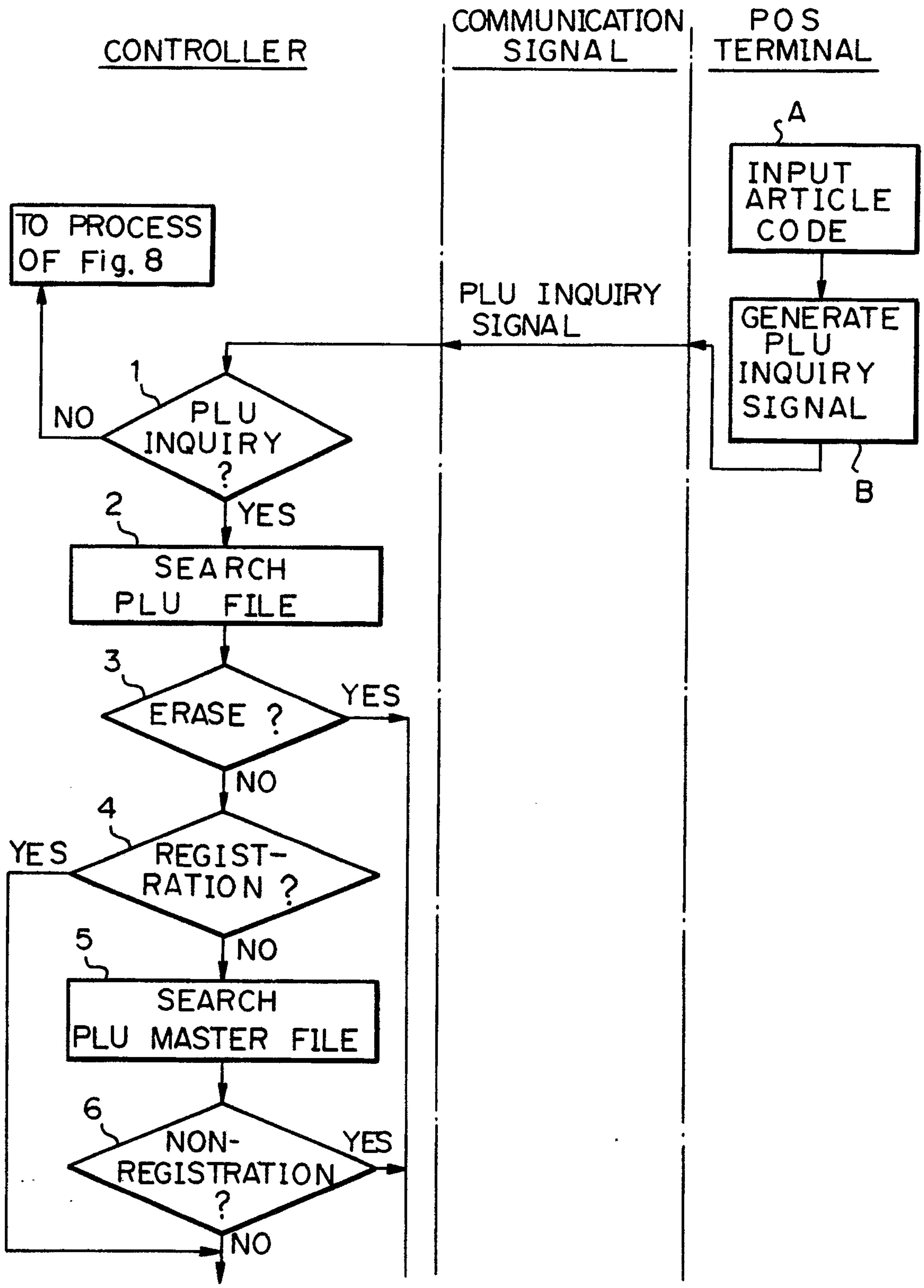
CONTROLLER
COMMUNICATION SIGNAL
POS TERMINAL
A
INPUT ARTICLE CODE
TO PROCESS OF Fig. 8
PLU INQUIRY SIGNAL
GENERATE PLU INQUIRY SIGNAL
B
1
NO
PLU INQUIRY ?
YES
2
SEARCH PLU FILE
3
ERASE ?
YES
NO
4
YES
REGISTRATION ?
NO
5
SEARCH PLU MASTER FILE
6
NON-REGISTRATION ?
YES
NO

Fig. 7B

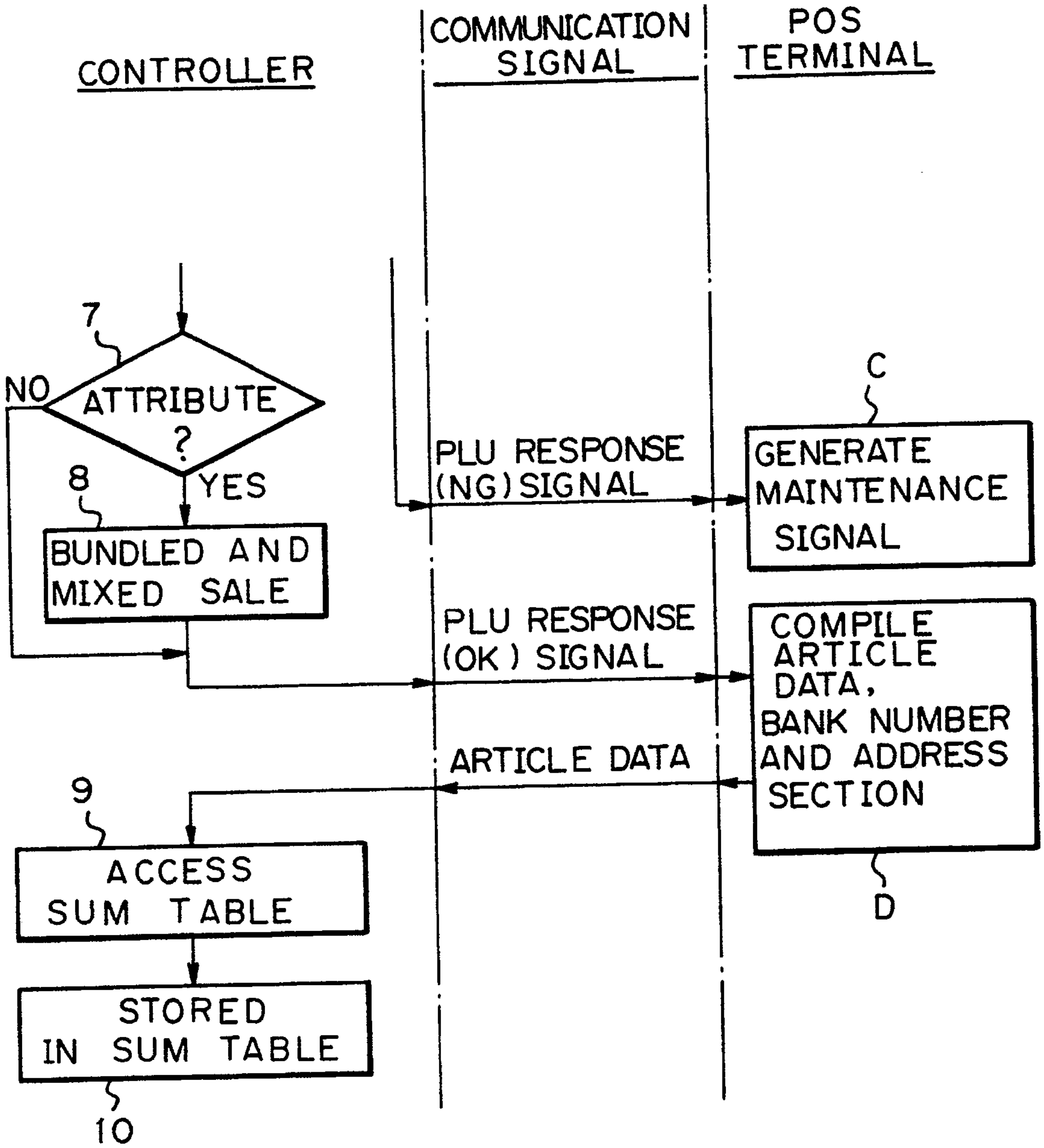
CONTROLLER
COMMUNICATION SIGNAL
POS TERMINAL
7
ATTRIBUTE ?
NO
YES
8
BUNDLED AND MIXED SALE
C
GENERATE MAINTENANCE SIGNAL
PLU RESPONSE (NG) SIGNAL
PLU RESPONSE (OK) SIGNAL
COMPILE ARTICLE DATA, BANK NUMBER AND ADDRESS SECTION
ARTICLE DATA
9
ACCESS SUM TABLE
STORED IN SUM TABLE
10
D

Fig. 8

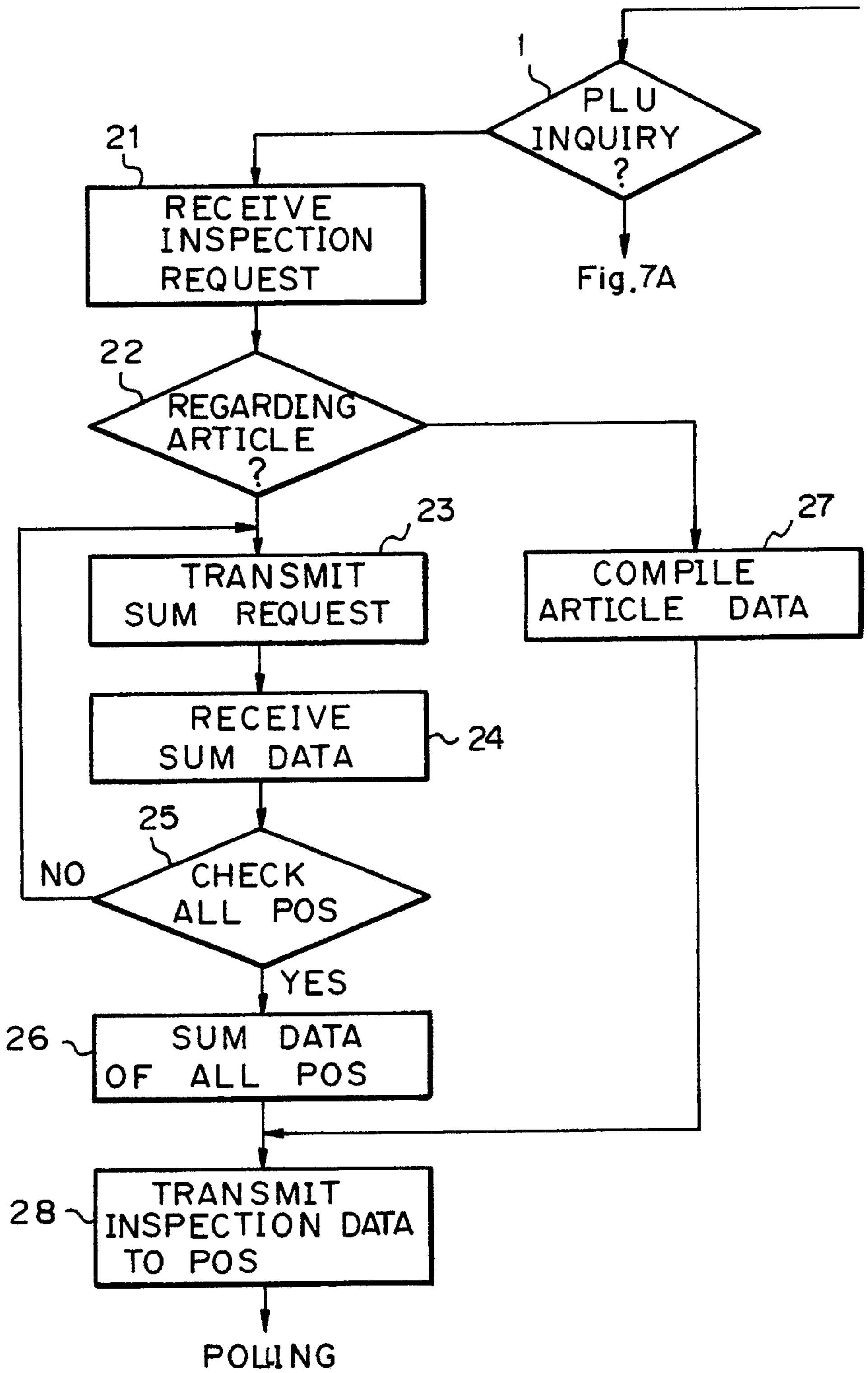
1
PLU INQUIRY ?
21
RECEIVE INSPECTION REQUEST
Fig.7A
22
REGARDING ARTICLE ?
23
TRANSMIT SUM REQUEST
27
COMPILE ARTICLE DATA
RECEIVE SUM DATA
24
25
NO
CHECK ALL POS
YES
26
SUM DATA OF ALL POS
28
TRANSMIT INSPECTION DATA TO POS
POLLING

Fig. 9